(19) Europäisches Patentamt
European Patent Office
Office européen des brevets

(11) Publication number: 0 438 051 A2

# (12) EUROPEAN PATENT APPLICATION

(21) Application number: 91100038.8

(22) Date of filing: 02.01.91

(51) Int. Cl.5: C08L 81/02, //(C08L81/02,9:00)

(30) Priority: 12.01.90 JP 5396/90

(43) Date of publication of application: 24.07.91 Bulletin 91/30

(84) Designated Contracting States: BE DE GB NL

(71) Applicant: MITSUBISHI RAYON CO., LTD.
3-19, Kyobashi 2-chome Chuo-Ku
Tokyo 104(JP)

(72) Inventor: Yamamoto, Naoki, c/o Central Research Lab.
Mitsubishi Rayon Co., Ltd, 20-1, Miyukicho
Otake-shi, Hiroshima(JP)
Inventor: Nakata, Akira, c/o Central Research Lab.
Mitsubishi Rayon Co., Ltd, 20-1, Miyukicho
Otake-shi, Hiroshima(JP)
Inventor: Mori, Hiroshi, c/o Central Research Lab.
Mitsubishi Rayon Co., Ltd, 20-1, Miyukicho
Otake-shi, Hiroshima(JP)
Inventor: Ueno, Takuya
3-5, Ikedauemachi, Nagata-ku
Kobe-shi, Hyogo(JP)

(74) Representative: Hansen, Bernd, Dr. Dipl.-Chem. et al
Hoffmann, Eitle & Partner Patent- und Rechtsanwälte Arabellastrasse 4
W-8000 München 81(DE)

## (54) Polyarylene sulfide resin composition.

(57) A polyarylene sulfide resin composition comprising a composition obtained by adding a monomer having one or more ethylenic unsaturated bonds (component A) to a composition comprising 60 to 99.5 parts by weight of a polyarylene sulfide resin (component B) and 40 to 0.5 parts by weight of a conjugated diene polymer (component C), the amount of said monomer being 30 to 0.1 parts by weight based on 100 parts by weight of the total amount of components B and C, and then reacting these components A, B and C. The present invention provides a composition of excellent performance comprising a polyarylene sulfide resin, a conjugated diene polymer, a monomer and if necessary a filler in which these components are uniformly dispersed and mixed to such a degree that phase separation is not caused even through molding steps (e.g. extrusion molding, injection molding) carried out under normal conditions and which, because of these components being mixed in an appropriate blending ratio, has excellent impact strength without a large reduction in the excellent characteristics of polyarylene sulfide and also gives molded products endowed with excellent surface appearance.

EP 0 438 051 A2

# POLYARYLENE SULFIDE RESIN COMPOSITION

## BACKGROUND OF THE INVENTION

### FIELD OF THE INVENTION

The present invention relates to a polyarylene sulfide resin composition excellent in impact strength and surface appearance.

### DESCRIPTION OF THE PRIOR ART

In Japanese Patent Application Kokai No. 56-118456, a polyarylene sulfide resin composition which is a blend with a particular conjugated diene type block copolymer obtained from a conjugated diene compound and an aromatic vinyl compound, is disclosed as one having an improved impact strength.

Japanese Patent Application Kokoku No. 53-13469 discloses a composition obtained by blending a diene rubber-modified polystyrene and a diene rubber-modified styrene/acrylonitrile copolymer.

Further, Japanese Patent Application Kokai No. 1-215854 and 1-185366 disclose a blend of a block or graft copolymer composed mainly of a polyarylene sulfide, an aromatic vinyl compound and a conjugated diene compound with a modified copolymer obtained by grafting a glycidyl group-containing unsaturated compound to the hydrogenated product of said block or graft copolymer. These blends are comparatively superior in that they have an improved impact strength, but it cannot be helped to say that these blends are still unsuitable to exhibit high heat resistance and sufficient mechanical strength. Also, because of a necessity to have a step in which a glycidyl group-containing unsaturated compound is to be grafted to the block or graft copolymer, there are problems that the manufacturing method is complicated and also disadvantageous in terms of cost.

As described above, these compositions are insufficient to attain the improvement of impact strength without injuring the heat resistance and mechanical properties inherent to polyarylene sulfide. Also, there is a problem that molded products of these compositions are poor in surface appearance.

If a polyarylene sulfide resin and a conjugated diene polymer, both having a powdery form, are mixed by a method of mixing on a Henschel mixer, etc., extruding and pelletizing, the blend obtained, because of a poor compatibility between the both, has no sufficiently improved impact strength, and also there is a problem of the molded product being poor in surface appearance.

In view of such a situation, the present inventors have extensively studied to obtain a polyarylene sulfide resin composition improved in impact strength without a large reduction in the heat resistance and mechanical strength inherent to the polyarylene sulfide resin, and also giving molded products having a good surface appearance. The present inventors have thus attained to the present invention.

## SUMMARY OF THE INVENTION

The gist of the present invention is a polyarylene sulfide resin composition comprising a composition obtained by adding a monomer having one or more ethylenic unsaturated bonds (component A) to a composition comprising 60 to 99.5 parts by weight of a polyarylene sulfide resin (component B) and 40 to 0.5 parts by weight of a conjugated diene polymer (component C), the amount of said monomer being 30 to 0.1 parts by weight based on 100 parts by weight of the total amount of components B and C, and then reacting these components A, B and C.

An object of the present invention is to provide a composition of excellent performance comprising a polyarylene sulfide resin, a conjugated diene polymer, a monomer and if necessary a filler in which these components are uniformly dispersed and mixed to such a degree that phase separation is not caused even through molding steps (e.g. extrusion molding, injection molding) carried out under normal conditions and which, because of these components being mixed in an appropriate blending ratio, has excellent impact strength without a large reduction in the excellent characteristics of polyarylene sulfide and also gives molded products endowed with excellent surface appearance.

Other objects and advantages of the invention will become apparent from the following description.

## PREFERRED EMBODIMENTS OF THE INVENTION

The polyarylene sulfide resin used in the present invention includes polymers having as a main

constituent unit a.repeating unit represented by the formula,

$$-\!\!\!-\!\!\!-(Ar - S)-\!\!\!-\!\!\!-$$

where Ar represents

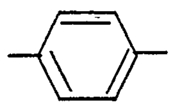
or
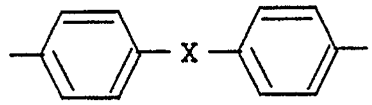

(in which X represents -$SO_2$, -CO-, -O- or an alkylene group having 5 or less carbon atoms, and said alkylene group may be methylene or polymethylene optionally having up to two methyl side chains), or those having 1 to 3 halogen atoms or 1 to 3 methyl groups on their aromatic ring, or mixtures of two or more thereof. The above polyarylene sulfide resin may be of a straight-chain structure or a branched one.

Among such polyarylene sulfide resins, polyphenylene sulfide is preferably used.

Any conjugated diene polymer may be used in the present invention as far as a monomer for forming the main constituent unit of the polymer is a diolefin having a conjugated double bond. Such a monomer includes 1,3-butadiene, 2-methyl-1,3-butadiene (isoprene), 2,3-dimethyl-1,3-butadiene, chloroprene, 1,3-pentadiene, 1,3-hexadiene, etc. Among these, 1,3-butadiene and isoprene can be given as preferred examples. The conjugated diene polymer used in the present invention may be a copolymer comprising two or more of the monomers described above. Also, the conjugated diene polymer may be a copolymer of the foregoing monomer with a small amount of a other copolymerizable vinyl monomer (e.g. styrene, acrylonitrile) so far as the object of the present invention is not injured. The conjugated diene polymer may be of a cross-linked structure or non-crosslinked structure. This conjugated diene polymer can be produced by a conventional method such as solution polymerization, emulsion polymerization in aqueous systems, etc.

In the present invention, an appropriate blending ratio of the polyarylene sulfide resin to the conjugated diene polymer is 60 to 99.5 parts by weight of the former to 40 to 0.5 parts by weight of the latter in terms of the improvement of impact strength, and a blending ratio of 75 to 90 parts by weight of the former to 25 to 10 parts by weight of the latter is preferred. When the conjugated diene polymer is less than 0.5 part by weight, an impact strength-improving effect for the polyarylene sulfide resin is small, and when it exceeds 40 parts by weight, the strength, stiffness and heat resistance of molded products obtained are undesirably injured.

In the present invention, any monomer may be used in the presence of the polyarylene sulfide resin and conjugated diene polymer as far as the monomer has one or more polymerizable ethylenic unsaturated bonds (hereinafter this monomer is referred simply to as monomer). Examples of such a monomer include aromatic alkenyl compounds such as styrene, α-methylstyrene, vinylstyrene, vinyltoluene, vinylnaphthalene, vinylanthracene, etc.; (meth)acrylates such as methyl (meth)acrylate, ethyl (meth)acryalte, butyl (meth)-acrylate, 2-ethylhexyl (meth)acrylate, lauryl (meth)acrylate, dodecyl (meth)acrylate, stearyl (meth)acrylate, 2-hydroxyethyl (meth)crylate, 2-hydroxypropyl (meth)acrylate, cyclohexyl (meth)acrylate, glycidyl (meth)-acrylate, dimethylaminoethyl (meth)acrylate, diethylaminoethyl (meth)acrylate, tetrahydrofurfuryl (meth)-acrylate, etc.; N-substituted or non-substituted maleimides such as maleimide, N-methylmaleimide, N-phenylmaleimide, N-ethylmaleimide, N-cyclohexylmaleimide, etc.; (meth)acrylamides such as (meth)-acrylamide, N-methyl(meth)acrylamide, N,N-dimethyl(meth)acrylamide, etc.; unsaturated acids or unsaturated acid anhydrides such as (meth)acrylic acid, maleic acid, itaconic acid, maleic acid anhydride, itaconic acid anhydride, etc.; glycidyl itaconates; butenecarboxylates; unsaturated glycidyl esters such as allyl glycidyl ether, 2-methylallylglycidyl ether, styrene-p-glycidyl ether, 3,4-epoxybutene, 3,4-epoxy-3-methyl-1-butene, 3,4-epoxy-1-pentene, 3,4-epoxy-3-methyl-1-pentene, 5,6-epoxy-1-hexene, vinylcyclohexene monooxide, etc.; vinyl cyanides such as (meth)acrylonitrile, etc.; vinyl ether compounds such as vinyl ethyl ether, etc.; allyl methacrylate, triallyl cyanulate, diallyl phthalate, ethylene glycol dimethacrylate, 1,3-butylene glycol dimethacrylate, trimethylolpropane trimethacrylate, etc.

In terms of polymerizability, styrene, α-methylstyrene, methyl (meth)acrylate, ethyl (meth)acrylate, 2-ethylhexyl (meth)acrylate, 2-hydroxyethyl (meth)acrylate, glycidyl (meth)acrylate, N-methylmaleimide, N-phenylmaleimide, (meth)acrylamide, (meth)acrylic acid, maleic acid anhydride and (meth)acrylonitrile are preferred. Among these, methyl (meth)acrylate, 2-hydroxyethyl (meth)acrylate, glycidyl (meth)acrylate,

(meth)acrylamide, (meth)acrylic acid and acrylonitrile can be given as more preferred examples, and glycidyl (meth)acrylate can be given as the most preferred example.

When the amount of the monomer having one or more ethylenic unsaturated bonds is 30 to 0.1 parts by weight based on 100 parts by weight of the total amount of the polyarylene sulfide resin and conjugated diene polymer, the impact strength of compositions obtained by reacting this monomer improves.

The amount of this monomer is preferably 15 parts by weight or less, more preferably 10 parts by weight or less based on 100 parts by weight of the total amount of the polyarylene sulfide resin and conjugated diene polymer. Further, the amount of this monomer is preferably 0.5 part by weight or more, more preferably 1 part by weight or more based on 100 parts by weight of the total amount of the polyarylene sulfide resin and conjugated diene polymer. For example, it is preferred that the amount of this monomer is 0.5 to 10 parts by weight based on 100 parts by weight of the total amount of the polyarylene sulfide and conjugated diene polymer.

When the amount of the monomer exceeds 30 parts by weight based on 100 parts by weight of the total amount of the polyarylene sulfide resin and conjugated diene polymer, there is a fear that flowability at the time of molding is adversely affected. Contrary to this, when the amount is less than 0.1 part by weight, a good surface appearance becomes difficult to obtain.

The composition of the present invention may contain a filler as an additional component.

Such a filler may be of a fibrous form or granular form, or may comprise the both. Examples of the filler include glass fibers, carbon fibers, potassium titanate, asbestos, silicon carbide, ceramics fibers, metal fibers, silicon nitride, aramide fibers, PMF, barium sulfate, calcium sulfate, calcium silicate, calcium carbonate, magnesium carbonate, dolomite, antimony trioxide, zinc oxide, titanium oxide, magnesium oxide, iron oxide, molybdenum disulfide, mica, talc, kaolin, pyrophyllite, bentonite, sericite, zeolite, nepheline syenite, attapulgite, wollastonite, clay, ferrite, graphite, gypsum, glass beads, glass balloons, quartz, etc.

When these fillers are used, their amount used is preferably 10 to 300 Parts by weight based on 100 parts by weight of the total amount of the polyarylene sulfide resin and conjugated diene polymer. When the amount exceeds 300 parts by weight, the melt-flowability of the composition becomes poor, because of which the appearance of molded products obtained undesirably tends to be injured.

To the composition of the present invention may be added an antioxidant. Examples of the antioxidant include p-phenylenediamine derivatives such as N,N'-diphenyl-p-phenylenediamine, N-isopropyl-N'-phenyl-p-phenylenediamine, N-1,3-dimethylbutyl-N'-phenyl-p-phenylenediamine, etc.; dihydroquinoline derivatives such as 6-ethoxy-2,2,4-trimethyl-1,2-dihydroquinoline, etc.; and phenol derivatives such as 4,4'-butylidenebis(6-tert-butyl-m-cresol), 2,2'-methylenebis(4-methyl-6-tert-butylphenol), 2,2'-methylenebis(4-ethyl-6-tert-butylphenol), 4,4'-thiobis(6-tert-butyl-m-cresol), 2,6-di-tert-butyl-p-cresol,2,5-di-tert-amylhydroquinone, 2,5-di-tert-butylhydroquinone, etc.

Into the composition of the present invention may be incorporated if necessary a mold-release agent, a coloring agent, an ultraviolet ray absorber, a foaming agent, a rust preventive, a flame retardant, a flame retarding assistant, etc.

In the present invention, in order to add and react the monomer in the presence of a composition comprising the polyarylene sulfide resin and conjugated diene polymer, there may be employed any of the following methods, i.e. a method of mixing the conjugated diene polymer, the monomer and a radical polymerization initiator in the presence of the polyarylene sulfide resin and then polymerizing the monomer in that state, and a method of adding the conjugated diene polymer, the monomer and the radical polymerization initiator to a molten polyarylene sulfide resin and then stirring or kneading the mixture to carry out reaction (bulk polymerization). However, it is desirable to carry out the polymerization by the latter method.

When the filler is incorporated into this composition, it may be caused to coexist at the time of polymerization of the monomer or may be added after the polymerization of the monomer.

The radical polymerization initiator is used to react the monomer, and hence any of those having an ability to cause the monomer to start polymerization may be used. When the reaction is carried out in the molten state of the polyarylene sulfide resin, radical polymerization initiators having a half-life period of 1 minute or more at 100 °C are preferred because said resin has a melting temperature as high as 290 °C or more. Examples of such a radical polymerization initiator include benzoyl peroxide, p-chlorobenzoyl peroxide, 2,4-dichlorobenzoyl peroxide, acetyl peroxide, methyl ethyl ketone peroxide, dicumyl peroxide, tert-butyl perbenzoate, etc. When the polymerization is carried out in the melt-mixed state or melt-kneaded state of the polyarylene sulfide resin, the amount of the radical polymerization initiator added is preferably 0.01 to 10 parts by weight, more preferably 0.03 to 5 parts by weight based on 100 parts by weight of the total amount of the conjugated diene polymer, the monomer and the polyarylene sulfide resin.

For polymerizing the monomer, it is preferred to carry out the polymerization in an extruder in which the

polyarylene sulfide resin is in a melt-mixed state or melt-kneaded state. In other words, it is preferred to carry out the polymerization while passing a mixture of the polyarylene sulfide resin, the conjugated diene polymer, the monomer, the radical polymerization initiator and if necessary a filler and other additives through an extruder under normal extrusion conditions for the polyarylene sulfide resin or conditions similar thereto.

The polyarylene sulfide resin composition thus obtained shows no phase separation even through molding steps (e.g. extrusion molding, injection molding) carried out under normal conditions. Since the amounts of these polymers added to the polyarylene sulfide resin are appropriate, this composition has an improved impact strength without a large reduction in the excellent characteristics of the polyarylene sulfide and giving molded products having an excellent surface appearance.

The present invention will be illustrated in more detail with reference to the following examples, but it is not to be interpreted as being limited thereto.

In the examples, the Izod impact strength was measured according to ASTM D256, and heat distortion temperature (HDT) was measured according to ASTM D648. The appearance was evaluated as follows using a flat plate of 100 mm x 100 mm x 3 mm (thick) obtained by injection molding. When the system contains no filler, the presence and absence of a pearly luster was examined macroscopically, and appearance with no pearly luster was evaluated as ○ , and that with a pearly luster was evaluated as x. When the system contains the filler, a surface luster (60°) was measured by means of a goniophotometer (UGV-40 produced by Suga Shiken-ki Co.).

Example 1

90 Parts by weight of a polyphenylene sulfide resin (hereinafter referred to as PPS) (Tohpren T-4 produced by Tohpren Co., Ltd.; average particle size, 50 μm) and a solution of 0.15 part by weight of an antioxidant, 2,2'-methylenebis(4-methyl-6-tert-butylphenol) (Antage W-400 produced by Kawaguchi Kagaku Kogyo Co., Ltd.) in 10 parts by weight of a liquid polybutadiene (B-3000 produced by Nippon Soda Co., Ltd.; number average molecular weight, 3080) (hereinafter referred to as liquid PBd) were mixed and dried. The resulting mixture was blended with 1.5 parts by weight of glycidyl methacrylate (GMA) and 0.1 part by weight of benzoyl peroxide (BPO) by means of a Henschel mixer. The mixture thus obtained was extruded through a twin-screw extruder (Werner 30Φ) at a cylinder temperature of 290°C and pelletized. The resulting pellets were molded on an injection molding machine (IS-100 produced by Toshiba Machine Co., Ltd.) at a cylinder temperature of 290°C and a mold temperature of 80°C to prepare test pieces for evaluation of mechanical characteristics. Evaluation was then made. The results are shown in Table 1.

Examples 2 and 3

Test pieces was obtained in the same manner as in Example 1 except that the same polyphenylene sulfide resin, liquid polybutadiene and antioxidant as used in Example 1 were used in amounts shown in Table 1, and the mechanical characteristics were evaluated. The results are shown in Table 1.

Comparative Example 1

The same polyphenylene sulfide resin as used in Example 1 was alone molded under the extrusion conditions for pelletizing and the injection molding conditions shown in Example 1, and the mechanical characteristics were evaluated. The results are shown in Table 1.

Example 4

90 Parts by weight of the same polyphenylene sulfide resin as used in Example 1 and a solution of 10 parts by weight of polybutadiene rubber (Nipol 1220S produced by Nippon Zeon Co., Ltd.) (hereinafter referred to as PBd) and 0.15 part by weight of the same antioxidant as used in Example 1 in 100 parts by weight of toluene, were mixed and then dried to remove toluene. The mixture was then mixed with 1.5 parts by weight of glycidyl methacrylate and 0.1 part by weight of benzoyl peroxide by means of a Henschel mixer. The resulting mixture was melt-mixed, pelletized and injection-molded in the same manner as in Example 1. The test pieces obtained were evaluated for the mechanical characteristics. The results are shown in Table 1.

Examples 5 to 8

Procedure was carried out in the same manner as in Example 4 except that the blending ratio of the polyarylene sulfide resin to polybutadiene and the amounts of glycidyl methacrylate (GMA) and/or methyl methacrylate (MMA) and an antioxidant and benzoyl peroxide were changed as shown in Table 1. The mechanical characteristics of the test pieces obtained are shown in Table 1.

Example 9

80 Parts by weight of the same polyphenylene sulfide resin as used in Example 1, 20 parts by weight of about 5 mm cubic crumbs of polybutadiene rubber of the same brand as used in Example 4, 0.3 part by weight of the same antioxidant as used in Example 1, 2.5 parts by weight of glycidyl methacrylate and 0.2 part by weight of benzoyl peroxide were mixed by means of a Henschel mixer. The resulting mixture was extruded, pelletized and injection-molded in the same manner as in Example 1 to obtain test pieces. The mechanical characteristics of the test pieces were evaluated. The results are shown in Table 1.

Examples 10 to 12

Using components shown in Table 1, procedure was carried out in the same manner as in Example 4 except that a glass fiber (hereinafter referred to as GF), after mixed on a Henschel mixer, was added just before extrusion-pelletizing, and that the mold temperature at the time of injection molding was made 140 °C. The results are shown in Table 1.

Example 13

Using components shown in Table 1, procedure was carried out in the same manner as in Example 4 except that talc was added at the time of mixing on a Henschel mixer. The results are shown in Table 1.

Comparative Example 2

100 Parts by weight of the same polyphenylene sulfide resin as used in Example 1 was blended with 67 parts by weight of a glass fiber. The mixture was extruded, pelletized and injection-molded under the same conditions as used in Example 10 to obtain test pieces. The mechanical characteristics of the test pieces obtained were evaluated. The results are shown in Table 1.

Comparative Example 3

80 Parts by weight of the same polyphenylene sulfide resin as used in Example 1 and a solution of 20 parts by weight of a styrene/butadiene/styrene block copolymer (Califlex produced by Shell Chemical Co., Ltd.) in 100 parts by weight of toluene were mixed and dried. The resulting mixture was extruded, pelletized and injection-molded under the same conditions as used in Example 1 to obtain test pieces. The mechanical characteristics of the test pieces were evaluated. The results are shown in Table 1.

Comparative Example 4

A blend of 100 parts by weight of the same polyphenylene sulfide resin as used in Example 1 and 55 parts by weight of talc was extruded, pelletized and injection-molded under the same conditions as in Example 13 to obtain test pieces. The mechanical characteristics of the test pieces were evaluated. The results are shown in Table 1.

Table 1

| | PPS (T-4) (part) | Liquid PBd (part) | PBd (part) | GMA (part) | MMA (part) | Califlex (part) | W-400 (part) | BPO (part) | GF (part) | Talc (part) |
|---|---|---|---|---|---|---|---|---|---|---|
| Example 1 | 90 | 10 | | 1.5 | | | 0.15 | 0.1 | | |
| 2 | 80 | 20 | | 1.5 | | | 0.3 | 0.1 | | |
| 3 | 70 | 30 | | 1.5 | | | 0.45 | 0.1 | | |
| 4 | 90 | | 10 | 1.5 | | | 0.15 | 0.1 | | |
| 5 | 80 | | 20 | 2.5 | | | 0.3 | 0.2 | | |
| 6 | 80 | | 20 | 3.5 | | | 0.3 | 0.3 | | |
| 7 | 80 | | 20 | | 2.5 | | 0.3 | 0.2 | | |
| 8 | 80 | | 20 | 1.5 | 1.0 | | 0.3 | 0.2 | | |
| 9 | 80 | | 20 | 2.5 | | | 0.3 | 0.2 | | |
| 10 | 80 | | 20 | 2.5 | | | 0.3 | 0.2 | 67 | |
| 11 | 80 | | 20 | 3.5 | | | 0.3 | 0.3 | 67 | |
| 12 | 80 | | 20 | 2.5 | | | 0.3 | 0.2 | 43 | |
| 13 | 80 | | 20 | 3.5 | | | 0.3 | 0.3 | | 55 |
| Comparative Example 1 | 100 | | | | | | | | | |
| 2 | 100 | | | | | | | | 67 | |
| 3 | 80 | | | | | 20 | | | | |
| 4 | 100 | | | | | | | | | 55 |

- Cont'd -

Table 1 (Cont'd)

| Izod impact strength (with 1/8 notch) (kg·cm/cm) | HDT 4.6 kg/cm (°C) | Appearance | Luster |
|---|---|---|---|
| 10 | 100 | ○ | |
| 12 | 102 | ○ | |
| 15 | 91 | ○ | |
| 19 | 101 | ○ | |
| 30 | 102 | ○ | |
| 46 | 101 | ○ | |
| 23 | 102 | ○ | |
| 25 | 101 | ○ | |
| 27 | 100 | ○ | |
| 14 | 264 | | 110 |
| 17 | 264 | | 110 |
| 13 | 263 | | 110 |
| 14 | 258 | | 121 |
| 4 | 101 | | |
| 8 | 265 | | 115 |
| 11 | 105 | × | |
| 3 | 259 | | 123 |

Note:

T-4 : PPS produced by Tohpren Co.

PBd : Polybutadiene

GMA : Glycidyl methacrylate

MMA : Methyl methacrylate

W-400: Antage W-400

Example 14

Test pieces were prepared in the same manner as in Example 5 except that a straight chain-type PPS (M 2588 produced by Toray Phillips Co., Ltd.) was used as the polyphenylene sulfide resin, and then evaluated. The results are shown in Table 2.

Example 15

Test pieces were prepared in the same manner as in Example 5 except that glycidyl acrylate was used in place of glycidyl methacrylate, and then evaluated. The results are shown in Table 2.

Example 16

Test pieces were prepared in the same manner as in Example 5 except that polyisoprene was used in place of polybutadiene, and then evaluated. The results are shown in Table 2.

Examples 17 to 19

The pellet prepared in the same manner as in Example 14 and each of fillers shown in Table 2 were mixed, extruded through a 40 Φ single-screw extruder at a cylinder temperature of 300° C and injection-molded under the same conditions as in Example 10. The test pieces obtained was evaluated. The results are collectively shown in Table 2.

Examples 20 to 22

Test pieces were prepared in the same manner as in Example 5 except that glycidyl methacrylate was used in amounts shown in Table 2, and then evaluated. The results are collectively shown in Table 2.

Referential Example 1

100 Parts by weight of a hydrogenated styrene/butadiene/styrene block copolymer (Kraton G1650 produced by Shell Chemical Co., Ltd.; styrene content, about 30 wt.%), 5 parts by weight of glycidyl methacrylate and 0.5 part by weight of di-tert-butyl peroxide were mixed. The resulting mixture was extruded through a Werner's twin-screw extruder at a cylinder temperature of 170° C to obtain modified block copolymer pellets.

Comparative Example 5

20 Parts by weight of the modified block copolymer obtained in Referential Example 1, 80 parts by weight of the same polyphenylene sulfide resin as used in Example 1 and 0.3 part by weight of Antage W-400 were mixed and extruded through a Werner's twin-screw extruder at a cylinder temperature of 300° C to obtain pellets. The pellets thus obtained were injection-molded under the same conditions as in Example 1 to obtain test pieces. These test pieces were evaluated. The results are shown in Table 3.

Comparative Example 6

100 Parts by weight of pellets prepared in the same manner as in Comparative Example 5 and 67 parts by weight of a glass fiber were mixed. The resulting mixture was extruded and injection-molded under the same conditions as in Example 17 to obtain test pieces. These test pieces were evaluated. The results are shown in Table 3.

Comparative Example 7

Test pieces were prepared in the same manner as in Comparative Example 5 except that the amount of the modified block copolymer blended was made 29 parts by weight, and that of the polyphenylene sulfide resin blended was made 71 parts by weight. These test pieces thus obtained were evaluated. The results are shown in Table 3.

Comparative Example 8

Test pieces containing a glass fiber were prepared in the same manner as in Comparative Example 6 except that pellets obtained in the same manner as in Comparative Example 7 were used. The test pieces thus obtained were evaluated. The results are shown in Table 3.

It can be seen that rubber contents in Comparative Example 8 and Example 11 are almost the same

(about 20% as polybutadiene or hydrogenated butadiene), but that both the heat resistance and luster in Comparative Example 8 were inferior.

Comparative Example 9

Using a blend of 100 parts by weight of the same polyphenylene sulfide resin as used in Example 1 and 47 parts by weight of a carbon fiber, extrusion, pelletizing and injection molding were carried out under the same conditions as in Example 17 to obtain test pieces. The mechanical characteristics of the test pieces were evaluated. The results are shown in Table 3.

Table 2

| | PPS (part) | PBd (part) | Monomer (part) | W-400 (part) | BPO (part) | Filler (part) | Izod impact strength (with 1/8 notch) (kg·cm/cm) | HDT 4.6 kg/cm (°C) | Appear-ance | Luster |
|---|---|---|---|---|---|---|---|---|---|---|
| Example 14 | M2588 80 | PBd 20 | GMA 2.5 | 0.3 | 0.2 | | 35 | 102 | ○ | |
| 15 | T-4 80 | PBd 20 | GA 2.5 | 0.3 | 0.2 | | 30 | 102 | ○ | |
| 16 | T-4 80 | PIR 20 | GMA 2.5 | 0.3 | 0.3 | | 29 | 101 | ○ | |
| 17 | *1 100 | | | | | GF 100 | 18 | 266 | | 108 |
| 18 | *1 100 | | | | | GF 33 | 15 | 263 | | 117 |
| 19 | *1 100 | | | | | CF 43 | 13 | 258 | | 95 |
| 20 | T-4 80 | PBd 20 | GMA 0.5 | 0.3 | 0.2 | | 23 | 102 | ○ | |
| 21 | T-4 80 | PBd 20 | GMA 5 | 0.3 | 0.2 | | 48 | 101 | ○ | |
| 22 | T-4 80 | PBd 20 | GMA 7.5 | 0.3 | 0.2 | | 45 | 101 | ○ | |

Note: *1: Pellet obtained in the same manner as in Example 14.
M2588: Straight chain-type PPS; PIR: Polyisoprene
T-4: PPS produced by Tohpren Co., Ltd.; CF: Carboon fiber; GA: Glycidyl acrylate

Table 3

| | PPS (T-4) (part) | Modified block copolymer (part) | W-400 (part) | Filler (part) | Izod impact strength (with 1/8 notch) (kg·cm/cm) | HDT 4.6 kg/cm (°C) | Appear-ance | Luster |
|---|---|---|---|---|---|---|---|---|
| Comparative Example 5 | 80 | 20 | 0.3 | | 23 | 100 | × | |
| 6 | 80 | 20 | 0.3 | GF67 | 13 | 259 | | 85 |
| 7 | 71 | 20 | 0.3 | | 30 | 97 | × | |
| 8 | 80 | 20 | 0.3 | GF67 | 15 | 245 | | 80 |
| 9 | 100 | | | CF47 | 6 | 260 | | 88 |

## Claims

1. A polyarylene sulfide resin composition comprising a composition obtained by adding a monomer having one or more ethylenic unsaturated bonds (component A) to a composition comprising 60 to 99.5

parts by weight of a polyarylene sulfide resin (component B) and 40 to 0.5 parts by weight of a conjugated diene polymer (component C), the amount of said monomer being 30 to 0.1 parts by weight based on 100 parts by weight of the total amount of components B and C, and then reacting these components A, B and C.

**2.** A resin composition according to Claim 1, wherein the polyarylene sulfide resin is a polyphenylene sulfide resin.

**3.** A resin composition according to Claim 1, wherein the conjugated diene polymer is selected from the group consisting of polybutadiene, polyisoprene and a copolymer of 1,3-butadiene and isoprene.

**4.** A resin composition according to Claim 1, wherein the monomer having one or more ethylenic unsaturated bonds is the glycidyl ester of an $\alpha,\beta$-unsaturated acid.

**5.** A resin composition according to Claim 1, wherein the blending ratio of component B to component C is 75 to 90 parts by weight of B to 25 to 10 parts by weight of C.

**6.** A resin composition according to Claim 1, wherein the blending ratio of component A to 100 parts by weight of the total amount of components B and C is 0.5 to 10 parts by weight.

**7.** A resin composition according to Claim 1 containing an antioxidant as an additional component.

**8.** A resin composition according to Claim 1, wherein said resin composition is obtained by adding the conjugated diene polymer and the monomer to the polyarylene sulfide resin in a molten state and reacting the monomer.

**9.** A resin composition according to Claim 1 containing a filler as an additional component.